# EUROPEAN PATENT APPLICATION

(11) **EP 1 947 808 A2**
(43) Date of publication of application: **23.07.2008**
(21) Application number: 07118577.1
(22) Date of filing: 16.10.2007
(51) Int. Cl.: H04L 12/28, F24F 3/00, F24F 13/00

(54) **Building management system**

(30) Priority: 18.01.2007 KR 20070005702
(71) Applicant: Samsung Electronics Co., Ltd., Suwon-si, Gyeonggi-do 442-743 (KR)
(72) Inventor: Takeshi, Tanabe, Yeongtong-gu, Suwon-si, Gyeonggi-do (KR); Kim, Suhgoo, Seongnam-si, Gyeonggi-do (KR)
(74) Representative: Grünecker, Kinkeldey, Stockmair & Schwanhäusser Anwaltssozietät

(57) **Abstract**

Disclosed is a building management system. The building management system includes a multi-air conditioner system performing air-conditioning in a building, a Lon-works network for connecting a building management system (BMS) controller to facilities of the building except for the multi-air conditioner system, and a remote controller connected to the Lon-works network for controlling the multi-air conditioner system.

## Description

### CROSS-REFERENCE TO RELATED APPLICATION

This application claims the benefit of Korean Patent Application No. 2007-5702, filed on January 18, 2007, in the Korean Intellectual Property Office, the disclosure of which is incorporated herein by reference.

### BACKGROUND OF THE INVENTION

### 1. Field of the invention

The present invention relates to a building management system, and more particularly to a building management system capable of making Lon-works communication by using a remote controller of a multi-air conditioner system.

### 2. Description of the Prior Art

Recently, as buildings are getting bigger and more automated, buildings employing a building management system automatically managing facilities such as illuminators, elevators, and boilers provided in the buildings are increased. The conventional building management system mainly employs open networks, such as a building automation and control net (BACnet), a local operating network works (Lon-works), etc, in order to easily integrate the facilities with each other.

Among them, the Lon-works network is disclosed in Korean Unexamined Publication No. 2006-99918 ("Building Management System") in detail. According to the Korean Unexamined Publication No. 2006-99918, facilities of a building are controlled by a BMS controller, which centrally controls sub-systems such as power systems and illuminator systems constructed in the building over the Lon-works network, a multi-air conditioner system, which includes an outdoor unit and at least one indoor unit connected to the outdoor unit through an RS-485 communication scheme, and a Lon-works gateway, which allows the BMS controller to centrally control the multi-air conditioner system by converting Lon-works network and RS-485 communication data.

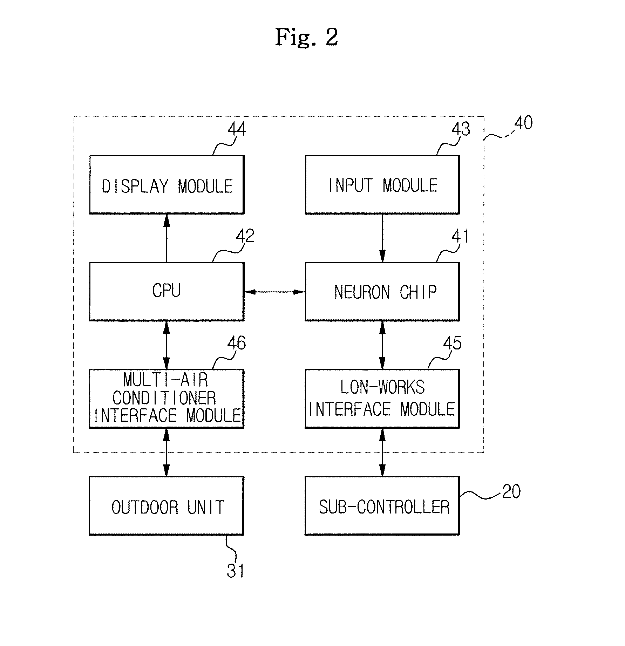

Meanwhile, the Lon-works network has a characteristic of an independent decentralized control. According to the independent decentralized control, the operation of facilities provided in a building is controlled independently from the BMS controller. For example, on the assumption that a boiler is further connected to a Lon-works network shown in FIG. 2 of the Korean Unexamined Publication No. 2006-99918, when an illuminator shown in FIG. 2 is turned on, the boiler is also turned on.

However, although the conventional building management system can perform the independent decentralized control between facilities directly connected to the Lon-works network, the building management system cannot perform the independent decentralized control between facilities connected to the Lon-works network and a multi-air conditioner system. Accordingly, the advantages of the Lon-works system cannot be sufficiently realized.

For example, a user may wish to turn on an indoor unit of the multi-air conditioner system as the illuminator shown in FIG. 2 is turned on. In this case, the conventional building management system cannot perform the independent decentralized control, but the BMS controller sends the operational command to the indoor unit of the multi-air conditioner system when the BMS controller detects the turn-on of the illuminator.

### SUMMARY OF THE INVENTION

Accordingly, the present invention has been made to solve above-mentioned problems occurring in the prior art, and an object of the present invention is to provide a building management system capable of performing independent decentralized control between a multi-air conditioner system and other facilities by adding a Lon-works communication function to a remote controller of the multi-air conditioner system.

In order to accomplish these objects, according to an aspect of the present invention, there is provided a building management system including a multi-air conditioner system performing air-conditioning in a building, a Lon-works network for connecting a building management system (BMS) controller to facilities of the building except for the multi-air conditioner system, and a remote controller connected to the Lon-works network for controlling the multi-air conditioner system.

In addition, independent decentralized control is performed between the multi-air conditioner system and other facilities regardless of the building management system controller.

Further, the remote controller includes a central processing unit (CPU) which converts multi-air conditioner protocol data received from the multi-air conditioner system into internal data and transmits the internal data to a neuron chip, or converts internal data into the multi-air conditioner protocol data and transmits the multi-air conditioner protocol data to the multi-air conditioner system if the neuron chip converts Lon-works protocol data into the internal data and transmits the internal data into the central processing unit.

The remote controller includes a neuron chip which converts Lon-works protocol data received from the Lon-works network into internal data and transmits the internal data to a central processing unit (CPU), or converts internal data into the Lon-works protocol data and transmits the Lon-works protocol data to the Lon-works network if the central processing unit converts multi-air conditioner protocol data into the internal data and transmits the internal data to the neuron chip.

A control command for the multi-air conditioner system, which is received from the building management system controller, is delivered to the multi-air conditioner system through the Lon-works network and the remote controller.

State data of the multi-air conditioner system are delivered to the building management system controller through the remote controller and the Lon-works network.

The remote controller is used for controlling other facilities.

According to still another aspect of the present invention, there is provided a remote controller of a multi-air conditioner system, the remote controller including a central processing unit (CPU) for transmitting data received from a multi-air conditioner system to a neuron chip, or transmitting data received from the neuron chip to the multi-air conditioner system, wherein the neuron chip is connected to a Lon-works network so as to transmit data received from the Lon-works network to the central processing unit (CPU), or transmit data received from the central processing unit (CPU) to the Lon-works network.

The central processing unit (CPU) converts multi-air conditioner protocol data received from the multi-air conditioner system into internal data and transmits the internal data to the neuron chip, or converts internal data into the multi-air conditioner protocol data and transmits the multi-air conditioner protocol data to the multi-air conditioner system if the neuron chip converts Lon-works protocol data into the internal data and transmits the internal data into the central processing unit.

The neuron chip converts Lon-works protocol data received from the Lon-works network into internal data and transmits the internal data to the central processing unit (CPU), or converts internal data into the Lon-works protocol data and transmits the Lon-works protocol data to the Lon-works network if the central processing unit converts multi-air conditioner protocol data into the internal data and transmits the internal data to the neuron chip.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing the structure of a building management system according to one embodiment of the present invention; and
FIG. 2 is a block diagram showing the structure of a remote controller shown in FIG. 1.

### DETAILED DESCRIPTION OF THE PREFERRED EMBODIMENTS

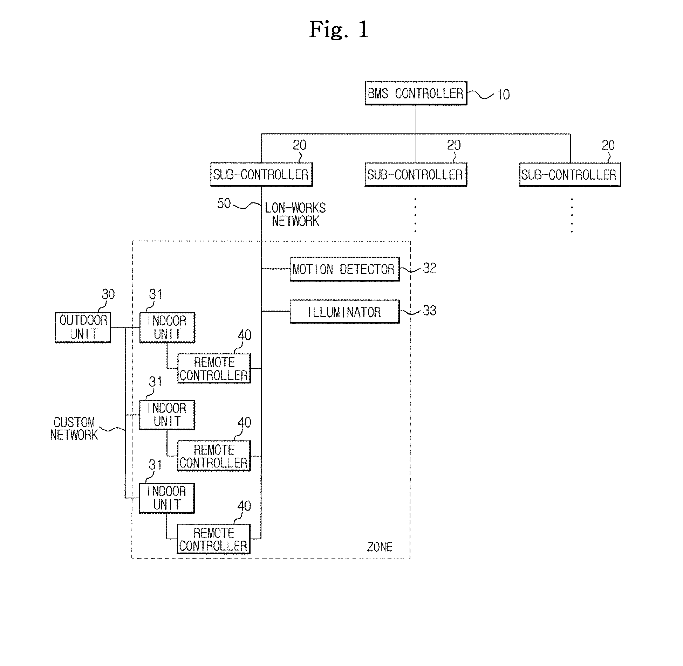

Hereinafter, exemplary embodiments of the present invention will be described in detail with reference to the accompanying drawings. As shown in FIG. 1, a building management system according to one embodiment of the present invention includes a BMS controller 10, which centrally controls facilities of a building, and sub-controllers 20, which control facilities over sub-nets and deliver operational states of the facilities over the sub-net to the BMS controller 10. In this case, the sub-net means a network between the facilities belonging to one zone which is a management unit for the facilities.

In addition, the building management system shown in FIG. 1 includes a multi-air conditioner system having an outdoor unit 30 and a plurality of indoor units 31 connected to the outdoor unit 30 in order to perform air-condition in the building, a motion detector 32 for detecting the presence of a human being indoors, and an illuminator 33. The outdoor unit 30 is connected to each indoor unit 31 over a customer network such as RS-485 in the multi-air conditioner system.

Further, the building management system includes the facilities 32 and 33 of the building, a Lon-works network 50 connecting the sub-controllers 20 to the BMS controller 10, and a remote controller 40 connected to the Lon-works network 50 to control the multi-air conditioner system.

As shown in FIG. 2, the remote controller 40 of FIG. 1 includes a neuron chip 41, a CPU 42, an input module 43, a display module 44, a Lon-works interface module 45, and a multi-air conditioner interface module 46.

The neuron chip 41 has an open Lon-works protocol (that is, Lontalk), and allows the loading of 64 network variables (NV) or less. In this case, the network variable is used for exchanging data between facilities over a Lon-works network. The neuron chip 41 analyzes Lon-works protocol data (control command data received from the BMS controller 10, or state data of the facilities received from the facilities) received from the Lon-works network 50, converts the Lon-works protocol data into internal data, which are used in the remote controller 40, and sends the internal data to the CPU 42 by using the network variable. In addition, the neuron chip 41 converts the internal data received from the CPU 42 into Lon-works protocol data and then sends the Lon-works protocol data to the Lon-works network 50.

Further, the neuron chip 41 determines the operational state of the multi-air conditioner system by using internal data received from the CPU 42 and delivers a remote control signal, which is received from the input module 43, to the CPU 42.

The CPU 42 converts multi-air conditioner protocol data (state data of the multi-air conditioner system), which have been received from the indoor unit 31 of the multi-air conditioner system, into internal data, which are used in the remote controller, and sends the internal data to the neuron chip 41. In addition, the CPU 42 converts internal data received from the neuron chip 41 into multi-air conditioner protocol data and sends the multi-air conditioner protocol data to the indoor unit 31 of the multi-air conditioner system.

When a predetermine button is manipulated, the input module 43 creates a remote control signal and then sends the remote control signal to the neuron chip 41, and the display module 44 displays the operational state of the multi-air conditioner system. The multi-air conditioner interface module 46 and the Lon-works interface module 45 connect the remote controller 40 to the multi-air conditioner system and the Lon-works network 50, respectively.

Hereinafter, the operation of the building management system according to an embodiment of the present invention will be described in detail. A control command for the multi-air conditioner system, which has been received from the BMS controller 10, is delivered to the remote controller 40 of the indoor unit 31 to be controlled through the sub-controller 20 and the Lon-works network 50. Then, the neuron chip 41 analyzes the control command for the multi-air conditioner system and then converts the control command according to a Lon-works protocol into internal data. Then, the internal data are delivered to the CPU 42.

The CPU 42 converts the internal data having been received from the neuron chip 41 into a control command according to a multi-air conditioner protocol and sends the control command to the indoor unit 31. The indoor unit 31 transmits the control command for the multi-air conditioner system to the outdoor unit 30, and the outdoor unit 30 analyzes the control command so as to control the operation of the indoor unit 31.

In contrast, state data of the multi-air conditioner system according to the multi-air conditioner protocol are converted into internal data in the CPU 42 and then delivered to the neuron chip 41. Then, the neuron chip 41 converts the internal data into state data according to the Lon-works protocol so as to transmit the state data to the Lon-works network 50. The state data are finally delivered to the BMS controller 10 through the sub-controller 20.

Meanwhile, if a user presses a predetermined button of the remote controller 40 in order to control the operation of the multi-air conditioner system, the input module 43 creates a remote control signal and sends the remote control signal to the CPU 42 through the neuron chip 41. Then, the CPU 42 delivers the remote control signal to the outdoor unit 30, and the outdoor unit 30 analyzes the remote control signal so as to control the operation of the multi-air conditioner system.

The remote controller 40 constituting the building management system according to the present invention enables the individual decentralized control between the multi-air conditioner system and remaining facilities 32 and 33 in addition to the above-described operation. In detail, states of the remaining facilities 32 and 33 such as a motion detector are set in network variables (or standard network variables types (SNVTs)) to be delivered to other facilities such as the multi-air conditioner system. In this state, when the states of the facilities 32 and 33 are changed, the network variables are transmitted to control target facilities such as the multi-air conditioner system. In this case, the operations of the control target facilities such as the multi-air conditioner system are controlled independent of the BMS controller 10. For example, the state of the motion detector 32 may be set in an SNVT to be delivered to the multi-air conditioner system. In this case, when the state of the motion detector 32 is changed, the SNVT is delivered to the remote controller 40. At this time, the remote controller 40 converts the SNVT into the multi-air conditioner protocol data and finally sends the multi-air conditioner protocol data to the outdoor unit 30, thereby controlling the operations of the indoor unit 30 and the outdoor unit 31.

Accordingly, if a user is present in a room, the building management system can automatically turn on the multi-air conditioner system without the control of the BMS controller 10. In contrast, if the user is out of the room, the building management system can automatically turn off the multi-air conditioner system.

In addition, the building management system according to the present invention employs only one remote controller 40 for controlling several indoor units 31 without connecting several remote controls to the indoor units of the multi-air conditioner system so that group control can be realized. In this case, when the remote controller 40 is manipulated, all indoor units 31 connected to the remote controller 40 are controlled.

Further, the remote controller 40 according to the present invention may be used in order to control remaining facilities connected to the Lon-works network 50 in addition to the multi-air conditioner system. In this case, buttons for controlling the facilities are additionally provided in the remote controller 40 so that the operation of a corresponding facility can be controlled.

If a user presses a predetermined button of the remote controller 40 for a facility to be controlled, the neuron chip 41 analyzes a remote signal received from the input module 43, converts the remote signal into data according to the Lon-works protocol, and delivers the data to a control target facility through the Lon-works network 50. Then, the control target facility operates according to the delivered data.

As described above, according to the present invention, a remote controller of a multi-air conditioner system is connected to a Lon-works network so that individual decentralized control can be achieved between facilities connected to the multi-air conditioner system and the Lon-works network.

In addition, according to the present invention, the operations of facilities connected to the Lon-works network can be controlled by the remote controller of the multi-air conditioner system.

Although exemplary embodiments of the present invention has been described for illustrative purposes, those skilled in the art will appreciate that various modifications, additions and substitutions are possible, without departing from the scope and spirit of the invention as disclosed in the accompanying claims.

## Claims

1. A building management system comprising:
a multi-air conditioner system performing air-conditioning in a building;
a Lon-works network for connecting a building management system (BMS) controller to facilities of the building except for the multi-air conditioner system; and
a remote controller connected to the Lon-works network for controlling the multi-air conditioner system.

2. The building management system as claimed in claim 1, wherein independent decentralized control is performed between the multi-air conditioner system and other facilities regardless of the building management system controller.

3. The building management system as claimed in claim 1, wherein the remote controller includes a central processing unit (CPU) which converts multi-air conditioner protocol data received from the multi-air conditioner system into internal data and transmits the internal data to a neuron chip, or converts internal data into the multi-air conditioner protocol data and transmits the multi-air conditioner protocol data to the multi-air conditioner system if the neuron chip converts Lon-works protocol data into the internal data and transmits the internal data into the central processing unit.

4. The building management system as claimed in claim 1, wherein the remote controller includes a neuron chip which converts Lon-works protocol data received from the Lon-works network into internal data and transmits the internal data to a central processing unit (CPU), or converts internal data into the Lon-works protocol data and transmits the Lon-works protocol data to the Lon-works network if the central processing unit converts multi-air conditioner protocol data into the internal data and transmits the internal data to the neuron chip.

5. The building management system as claimed in claim 1, wherein a control command for the multi-air conditioner system, which is received from the building management system controller, is delivered to the multi-air conditioner system through the Lon-works network and the remote controller.

6. The building management system as claimed in claim 1, wherein state data of the multi-air conditioner system are delivered to the building management system controller through the remote controller and the Lon-works network.

7. The building management system as claimed in claim 1, wherein the remote controller is used for controlling other facilities.

8. A remote controller of a multi-air conditioner system, the remote controller comprising:
a central processing unit (CPU) for transmitting data received from a multi-air conditioner system to a neuron chip, or transmitting data received from the neuron chip to the multi-air conditioner system; and
the neuron chip connected to a Lon-works network so as to transmit data received from the Lon-works network to the central processing unit (CPU), or transmit data received from the central processing unit (CPU) to the Lon-works network.

9. The remote controller as claimed in claim 8, wherein the central processing unit (CPU) converts multi-air conditioner protocol data received from the multi-air conditioner system into internal data and transmits the internal data to the neuron chip, or converts internal data into the multi-air conditioner protocol data and transmits the multi-air conditioner protocol data to the multi-air conditioner system if the neuron chip converts Lon-works protocol data into the internal data and transmits the internal data into the central processing unit.

10. The remote controller as claimed in claim 8, wherein the neuron chip converts Lon-works protocol data received from the Lon-works network into internal data and transmits the internal data to the central processing unit (CPU), or converts internal data into the Lon-works protocol data and transmits the Lon-works protocol data to the Lon-works network if the central processing unit converts multi-air conditioner protocol data into the internal data and transmits the internal data to the neuron chip.
